# EUROPÄISCHE PATENTSCHRIFT

(11) **EP 2 688 780 B1**
(45) Veröffentlichungstag und Bekanntmachung des Hinweises auf die Patenterteilung: **16.11.2016**
(21) Anmeldenummer: 12708747.6
(22) Anmeldetag: 27.01.2012
(51) Int. Cl.: B60T 8/40, B60T 8/24

(54) **Bremssystem und Fahrzeug mit einem deratigen Bremssystem**
Braking system and vehicle with such a braking system
Système de freinage et véhicule avec un tel système de freinage

(30) Priorität: 21.03.2011 DE 102011005822
(43) Veröffentlichungstag der Anmeldung: 29.01.2014
(73) Patentinhaber: Robert Bosch GmbH, 70442 Stuttgart (DE)
(72) Erfinder: KUNZ, Michael, 71711 Steinheim An Der Murr (DE); STRENGERT, Stefan, 70469 Stuttgart (DE)
(86) Internationale Anmeldenummer: PCT/EP2012/051366
(87) Internationale Veröffentlichungsnummer: WO 2012/126652

(56) Entgegenhaltungen:
- EP-A1- 1 151 901
- WO-A1-2010/102844
- DE-A1- 4 337 133
- DE-A1- 10 023 301
- DE-A1- 10 240 692
- DE-A1-102005 044 137
- DE-A1-102008 004 201
- US-B1- 6 315 371

## Beschreibung

Die Erfindung betrifft Bremssysteme für ein Fahrzeug.

### Stand der Technik

In der DE 10 2008 004 201 A1 ist ein mit zwölf elektrisch steuerbaren Ventilen ausgestattetes Bremssystem beschrieben. Das Bremssystem weist einen Hauptbremszylinder auf, in welchem mit einer mittels eines Bremskraftverstärkers verstärkten Fahrerbremskraft einbremsbar ist. An den Hauptbremszylinder sind zwei Bremskreise angebunden, wobei ein erster Bremskreis ein Trennventil aufweist, durch dessen Schließen ein Druckaufbau in den beiden Radbremszylindern des ersten Bremskreises trotz einer Drucksteigerung in dem Hauptbremszylinder unterbindbar ist. Stattdessen kann nach dem Schließen des Trennventils ein gewünschter Bremsdruck in den beiden Bremszylindern des ersten Bremskreises durch Pumpen einer Bremsflüssigkeit aus einem Bremsflüssigkeitsreservoir mittels einer Pumpe des ersten Bremskreises eingestellt werden. Sofern die an der Pumpe angeordnete Welle fremdbetrieben wird, müssen zumindest die beiden Radeinlassventile des Bremskreises in einen geschlossen Zustand gesteuert, um einen unerwünschten Druckaufbau in den beiden Radbremszylindern des ersten Bremskreises zu verhindern.

Die DE 100 23 301 A1 beschreibt eine elektrisch regelbare Bremsanlage mit einem Hauptbremszylinder und zwei Bremskreisen. Einer der zwei Bremskreise ist über ein Ventil mit einem parallel dazu angeordneten Rückschlagventil an dem Hauptbremszylinder angebunden. Außerdem ist der gleiche Bremskreis auch über eine Pumpe mit einem vorgeschalteten Trennventil an einem Bremsflüssigkeitsreservoir angebunden. Parallel zu der Pumpe und dem Trennventil sind außerdem ein weiteres Trennventil und ein Überdruckventil angeordnet. Des Weiteren weist dieser Bremskreis zwei Radeinlassventile und zwei Radauslassventile auf.

Des Weiteren ist in der WO2010/102844 A1 ein Bremssystem mit einem Bremskreis beschrieben, welcher über ein Trennventil an einen Hauptbremszylinder des Bremssystems angebunden ist und sowohl über eine Pumpe als auch über ein parallel dazu angeordnetes stetig regelbares Ventil mit einem Bremsflüssigkeitsreservoir des Bremssystems verbunden ist. Auch dieser Bremskreis hat zwei Radeinlassventile und zwei Radauslassventile.

Weitere Bremssystem sind aus der DE 10 2005 044 137 A1 und der US 6,315,371 B1 bekannt

### Offenbarung der Erfindung

Die Erfindung schafft ein Bremssystem für ein Fahrzeug mit den Merkmalen des Anspruchs 1 und ein Fahrzeug mit den Merkmalen des Anspruchs 7.

### Vorteile der Erfindung

Die Erfindung ermöglicht ein Bremssystem mit einem von dem Hauptbremszylinder entkoppelbaren ersten Bremskreis mit einer ersten Pumpe, einem ersten Radbremszylinder und einem zweiten Radbremszylinder, wobei trotz eines Antriebs der ersten Pumpe ein Druckaufbau sowohl in dem ersten Radbremszylinder als auch in dem zweiten Radbremszylinder lediglich durch das Schließen des (einzigen) Pumpensteuerventils unterbindbar ist. Somit ist die Anzahl der zum Verhindern des Druckaufbaus in den beiden Radbremszylindern des abkoppelbaren ersten Bremskreises zu schließenden Ventile mittels der vorliegenden Erfindung reduzierbar. Dies ermöglicht eine Reduzierung der Gesamtanzahl der elektrisch ansteuerbaren Ventile des erfindungsgemäßen Bremssystems. Auf diese Weise sind die Gesamtkosten für die Ventile eines Bremssystems und die Kosten für ein elektronisches Steuersystem zum Ansteuern aller elektrisch steuerbaren Ventile eines Bremssystems reduzierbar. Außerdem kann mittels der Reduzierung der Anzahl der elektrisch steuerbaren Ventile eines Bremssystems auch der Bauraumbedarf und das Gewicht des jeweiligen Bremssystems gesenkt werden.

Die erfindungsgemäßen Bremssysteme gewährleisten den Vorteil, dass nach einem Schließen des Trennventils der Fahrer nicht mehr direkt über den Hauptbremszylinder in den ersten Bremskreis hineinbremst. Durch das geschlossene Trennventil ist ein Weiterleiten des Drucksignals an den ersten und an den zweiten Radbremszylinder des ersten Bremskreises unterbunden. Stattdessen kann mittels der ersten Pumpe des ersten Bremskreises der in dem ersten und in dem zweiten Radbremszylinder des ersten Bremskreises vorliegende Bremsdruck aktiv eingestellt werden. Damit besteht die Möglichkeit, mittels eines Sensors oder mittels einer Schätzung zu ermitteln, welches Gesamtbremsmoment von dem Fahrer gewünscht wird, welches aktuelle Generator-Bremsmoment durch die rekuperative Bremse ausgeübt wird, welches hydraulische Bremsmoment eventuell durch einen weiteren Bremskreis auf mindestens ein Rad ausgeübt wird und welche Differenz zwischen dem gewünschten Gesamtbremsmoment und den aufgezählten (aktiv ausgeübten) Bremsmomenten noch besteht. Das der ermittelten Differenz entsprechende Bremsmoment kann anschließend mittels der ersten Pumpe, dem ersten Radbremszylinder und dem zweiten Radbremszylinder aufgebaut werden. Dies ermöglicht ein Verblenden des Generator-Bremsmoments, ohne dass der Fahrer dazu einen zusätzlichen Arbeitsaufwand ausführen muss. Außerdem ist das Verblenden so ausführbar, dass ein dem vom Fahrer vorgegebenen Gesamtbremsmoment und der aktuellen Geschwindigkeit des Fahrzeugs entsprechender Bremsweg trotz des Generator-Bremsmoments einhaltbar ist. Das Verblenden des Generator-Bremsmoments ist somit ausführbar, ohne dass dies für den Fahrer mit einem ungewohnten Fahrgefühl verbunden ist. Auch ein zeitlich variierendes rekuperatives Bremsmoment ist somit mittels der vorliegenden Erfindung verblendbar, ohne dass dies mit einer Komforteinbusse für den Fahrer verbunden ist.

Die vorliegende Erfindung ermöglicht insbesondere ein Bremssystem auf Basis einer ABS-Funktion, bei welchem ein verlässliches Verblenden eines Generator-Bremsmoments aufgrund der Abkoppelbarkeit des ersten Bremskreises von dem Hauptbremszylinder kostengünstig gewährleistet ist. Dies ist auch so umschreibbar, dass die vorliegende Erfindung ein ABS-Bremssystem ermöglicht, dessen erster Bremskreis von dem Hauptbremszylinder abkoppelbar ist und welches sich somit vorteilhaft zum Verblenden eines Generator-Bremselements eignet. Auf diese Weise kann beispielsweise ein Elektrofahrzeug mit einem wenig Bauraum erfordernden, wenig Gewicht aufweisenden und kostengünstigen rekuperativen Bremssystem auf Basis der ABS-Funktion ausgestattet werden.

Die Anwendbarkeit des erfindungsgemäßen Bremssystems ist jedoch nicht auf ein Elektrofahrzeug beschränkt. Beispielsweise kann auch ein Hybridfahrzeug mit dem erfindungsgemäßen Bremssystem ausgestattet werden. Ebenso lässt sich auch eine Querbeschleunigungs-abhängige Bremskraftverteilung bei einem erfindungsgemäßen Bremssystem auf einfache Weise realisieren. Bei einer Querbeschleunigungs-abhängigen Bremskraftverteilung wird die Bremskraft von einigen Rädern des Fahrzeugs, vorzugsweise an den beiden Hinterachsenrädern, entsprechend einer Aufstandskraft, welche bei einer Fahrt um eine Kurve auftritt, aufgeteilt. Auf diese Weise kann der Reibwert der Räder, vor allem der Reibwert der beiden Hinterräder, an die Querbeschleunigung angeglichen werden. Das Fahrzeug bremst somit in Kurven stabiler.

Zusätzlich bietet sich eine Verwendung der vorliegenden Erfindung für ein dynamisches Kurvenbremsen an. Bei dem dynamischen Kurvenbremsen wird die Bremskraft an einem kurveninneren Rad gegenüber der Bremskraft an einem kurvenäußeren Rad erhöht. Dies erzielt ein dynamischeres Fahrverhalten.

Des Weiteren kann das erfindungsgemäße Bremssystem auch für ein vorteilhafteres Bremsen während einer Rückwärtsfahrt verwendet werden. Insbesondere wird dabei durch eine Erhöhung der Bremskraft an der Hinterachse eine für eine Rückwärtsfahrt bessere Bremskraftverteilung eingestellt. Man spricht dabei auch von einer Rückwärts-Bremskraftverteilung. Vor allem bei einer langsamen Rückwärtsfahrt bergab ermöglicht dies ein deutliche stabileres Bremsverhalten.

Der erste Bremskreis umfasst als Pumpensteuerventil ein in einem Ansaugleitungsweg zwischen dem Bremsmediumreservoir und der ersten Pumpe angeordnetes Hochdruckschaltventil. Die hier aufgezählte Anbringposition des Pumpensteuerventils ermöglicht verlässlich ein Verhindern eines Druckaufbaus in dem ersten Radbremszylinder und in dem zweiten Radbremszylinder trotz eines Antriebs der ersten Pumpe.

Außerdem umfasst der erste Bremskreis zusätzlich ein stetig verstellbares Regelventil, wobei ein drittes Bremsmediumvolumen aus dem ersten Radbremszylinder und dem zweiten Radbremszylinder über das zumindest teilgeöffnete Regelventil in das Bremsmediumreservoir transferierbar ist und eine Bremsmediumverschiebung aus dem ersten Radbremszylinder und dem zweiten Radbremszylinder in das Bremsmediumreservoir mittels eines Schließens des Regelventils unterbindbar ist. Somit kann der in dem ersten Radbremszylinder und in dem zweiten Radbremszylinder vorliegende Bremsdruck mittels des Regelventils genauer auf einen gewünschten Wert eingestellt werden. Außerdem ist über das Regelventil ein Druckabbau des Bremsdrucks des ersten Radbremszylinders und des zweiten Radbremszylinders durch die Verschiebung des dritten Bremsmediumvolumens in das Bremsmediumreservoir vergleichsweise schnell ausführbar.

Das Bremssystem weist genau sieben elektrisch schaltbare Ventile auf. Die Elektronik des Bremssystems ist somit kostengünstig ausbildbar.

Insbesondere kann das Bremssystem eine Steuervorrichtung umfassen, mittels welcher an jedes in zumindest in einen offenen Zustand und in einen geschlossenen Zustand elektrisch schaltbare Ventil des Bremssystems jeweils ein eigenes Steuersignal ausgebbar ist, wobei die Steuervorrichtung genau sieben Signalausgänge aufweist, an welchen die Steuersignale ausgebbar sind. Für das Bremssystem ist somit eine kostengünstige und wenig Bauraum erfordernde Steuervorrichtung ausreichend.

Des Weiteren kann die Steuervorrichtung zusätzlich dazu ausgelegt sein, eine von einem Sensor bereitgestellte Größe bezüglich einer Betätigungsstärke einer Betätigung eines Bremsbetätigungselements durch einen Fahrer des Fahrzeugs und eine Rekuperationsgröße bezüglich eines auf mindestens die dem ersten Radbremszylinder und dem zweiten Radbremszylinder zugeordneten Räder ausgeübten Generator-Bremsmoments zu empfangen, unter Berücksichtigung der empfangenen Größe und der empfangenen Rekuperationsgröße eine Soll-Trennventil-Größe des Trennventils, eine Soll-Regelventil-Größe des Regelventils und eine Soll-Pump-Größe der ersten Pumpe festzulegen, und ein der Soll-Trennventil-Größe entsprechendes Trennventil-Steuersignal an das Trennventil, ein der Soll-Regelventil-Größe entsprechendes Regelventil-Steuersignal an das Regelventil und ein der Soll-Pump-Größe entsprechendes Pump-Steuersignal an die erste Pumpe bereitzustellen. Somit ist ein einfaches, aber verblendfähiges Bremssystem auf Basis eines ABS-Systems realisierbar. Das hier beschriebene Bremssystem trägt somit zu einer besseren Akzeptanz von Elektro- und Hybridfahrzeugen bei. Aufgrund der vorteilhaften Rekuperationsfähigkeit des Bremssystems kann die Fahrzeugbatterie außerdem verkleinert werden. Somit ist auch eine kostengünstige Batterie in einem mit dem Bremssystem ausgestatteten Fahrzeug verwendbar.

In einer weiteren vorteilhaften Ausführungsform umfasst das Bremssystem ein mit dem Hauptbremszylinder verbundenes Bremsbetätigungselement, welches mit mindestens einem verstellbaren Hauptbremszylinder-Kolben des Hauptbremszylinders derart verbunden ist, dass eine auf das Bremsbetätigungselement aufgebrachte Fahrerbremskraft unverstärkt auf den Hauptbremszylinder-Kolben übertragbar ist. Stattdessen kann die Bremskraftverstärkung bei dem hier beschriebenen Bremssystem von dem Hydraulikaggregat, insbesondere von der ersten Pumpe, übernommen werden. Durch den Verzicht auf einen Bremskraftverstärker können die Kosten des Bremssystems zusätzlich reduziert werden. Außerdem entfallen dadurch die Nachteile eines Vakuumboosters, insbesondere die Notwendigkeit einer Vakuumversorgung. Auf diese Weise wird das Gesamtgewicht des Bremssystems signifikant unter dem eines konventionellen Bremssystems reduziert.

Das Bremssystem umfasst einen mit dem Hauptbremszylinder hydraulisch verbundenen zweiten Bremskreis mit einer zweiten Pumpe und mindestens einem dritten und einem vierten Radbremszylinder, denen jeweils ein Radeinlassventil und jeweils ein Radauslassventil zugeordnet sind. Somit hat der Fahrer die Möglichkeit, auch nach einem Schließen des Trennventils aktiv in den zweiten Bremskreis hineinzubremsen.

Vorzugsweise umfasst das Bremssystem einen Motor mit einer Welle, an welcher die erste Pumpe und die zweiten Pumpe angeordnet sind. Da ein Druckaufbau in dem ersten Radbremszylinder und in dem zweiten Radbremszylinder mittels des Pumpensteuerventils trotz eines Antriebs der ersten Pumpe unterbindbar ist, kann kostengünstiger Weise für beide Pumpen der gleiche Motor benutzt werden.

Bevorzugter Weise ist der erste Bremskreis nach dem Schließen des Trennventils vollständig von dem Hauptbremszylinder entkoppelt. Dies ist über eine einfache Ausbildung des Trennventils realisierbar.

Die oben genannten Vorteile sind auch bei einem Fahrzeug mit einem derartigen Bremssystem gewährleistet. In einer vorteilhaften Weiterbildung ist das Fahrzeug für eine Höchstgeschwindigkeit kleiner als 100 km/h, vorzugsweise kleiner als 80 km/h, insbesondere kleiner als 60 km/h ausgelegt. Ein derartiges Fahrzeug ist durch ein geringes Gewicht und einen einfachen Aufbau gekennzeichnet. Eine ESP-Funktion ist deshalb für ein Bremssystem eines derartigen Fahrzeugs nicht notwendig. Somit kann das erfindungsgemäße kostengünstige Bremssystem mit der ABS-Funktion in einem derartigen Fahrzeug, welches insbesondere als Elektrofahrzeug ausgebildet sein kann, vorteilhaft verwendet werden. Es wird jedoch darauf hingewiesen, dass die Einsetzbarkeit der Bremssysteme nicht auf ein Fahrzeug mit einer derartigen Geschwindigkeitsbegrenzung limitiert ist.

Man kann die Eigenschaft des Pumpensteuerventils auch so umschreiben, dass das in seinen geschlossenen Zustand gesteuerte Pumpensteuerventil entweder einen Ansaugleitungsweg der ersten Pumpe blockiert, oder als einziges Ventil den zu den mindestens zwei Radbremszylindern führenden Förderleitungsweg versperrt. Insbesondere ist für die Blockierung des Ansaugleitungswegs oder die Versperrung des zu den mindestens zwei Radbremszylindern führenden Förderleitungswegs nur das eine Pumpensteuerventil und kein weiteres Ventil zu schließen.

### Kurze Beschreibung der Zeichnungen

Weitere Merkmale und Vorteil der vorliegenden Erfindung werden nachfolgend anhand der Figuren erläutert. Es zeigen:
- Fig. 1: eine schematische Darstellung einer Ausführungsform des Bremssystems;
- Fig. 2: eine schematische Darstellung eines nicht von der Erfindung umfassten Bremssystems; und
- Fig. 3: ein Flussdiagramm eines nicht von der Erfindung umfassten Verfahrens zum Betreiben des Bremssystems.

### Ausführungsformen der Erfindung:

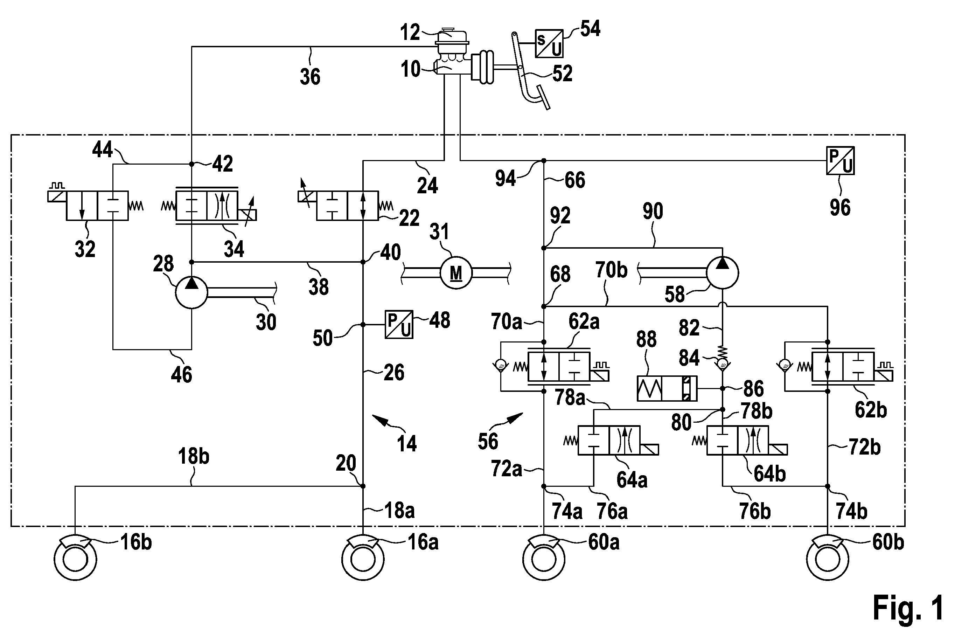

Fig. 1 zeigt eine schematische Darstellung einer ersten Ausführungsform des Bremssystems.

Das in Fig. 1 schematisch dargestellte Bremssystem weist einen Hauptbremszylinder 10 und ein zusätzliches Bremsmediumreservoir 12 auf. Das Bremsmediumreservoir 12 kann über mindestens eine hydraulische Verbindung, wie beispielsweise eine Schnüffelbohrung, mit dem Hauptbremszylinder 10 verbunden sein.

Das Bremssystem hat zumindest einen ersten Bremskreis 14 mit mindestens einem ersten Radbremszylinder 16a und einem zweiten Radbremszylinder 16b. Die beiden Radbremszylinder 16a und 16b des ersten Bremskreises 14 können zwei Rädern einer gemeinsamen Achse eines Fahrzeugs, insbesondere der Hinterachse, zugeordnet sein. Das hier beschriebene Bremssystem ist jedoch nicht auf eine Anordnung der den beiden Radbremszylindern 16a und 16b des ersten Bremskreises 14 zugeordneten Rädern an einer gemeinsamen Achse eines Fahrzeugs beschränkt. Beispielsweise können die den beiden Radbremszylindern 16a und 16b des ersten Bremskreises zugeordneten Räder auch an einer Seite oder diagonal am Fahrzeug angeordnet sein.

Bevorzugter Weise ist der erste Radbremszylinder 16a über eine erste Ausgangsleitung 18a mit einem Verzweigungspunkt 20 verbunden. Der zweite Radbremszylinder 16b kann über eine zweite Ausgangsleitung 18b ebenfalls mit dem Verzweigungspunkt 20 verbunden sein. Das hier beschriebene Bremssystem ist jedoch nicht auf eine derartige Verbindung der beiden Radbremszylinder 16a und 16b des ersten Bremskreises 14 beschränkt.

Der erste Bremskreis 14 weist auch ein Trennventil 22 auf, welches derart mit dem Hauptbremszylinder 10 verbunden ist, dass ein erstes Bremsmediumvolumen aus dem Hauptbremszylinder 10 über das zumindest teilgeöffnete Trennventil 22 (jeweils) in den ersten Radbremszylinder 16a und in den zweiten Radbremszylinder 16b transferierbar ist. Eine Bremsmediumverschiebung aus dem Hauptbremszylinder 10 in den ersten Radbremszylinder 16a und in den zweiten Radbremszylinder 16b ist jedoch mittels eines Schließens des Trennventils 22 unterbindbar. Das Trennventil 22 kann beispielsweise über eine Zufuhrleitung 24 mit dem Hauptbremszylinder 10 verbunden sein. Außerdem kann das Trennventil 22 über eine erste Verbindungsleitung 26 mit dem Verzweigungspunkt 20 verbunden sein.

Der erste Bremskreis 14 umfasst auch eine erste Pumpe 28, mittels welcher nach dem Schließen des Trennventils 22 zumindest in einem ersten Modus des ersten Bremskreises 14 ein zweites Bremsmediumvolumen aus dem Bremsmediumreservoir 12 (jeweils) in den ersten Radbremszylinder 16a und in den zweiten Radbremszylinder 16b pumpbar ist. Somit ist es nach einem "Abkoppeln" des ersten Bremskreises 14 durch Schließen des Trennventils 22 und bei einem Steuern des ersten Bremskreises 14 in den ersten Modus möglich, einen Bremsdruck sowohl in dem ersten Radbremszylinder 16a als auch in dem zweiten Radbremszylinder 16b mittels der ersten Pumpe 28 aktiv aufzubauen. Vorzugsweise ist die erste Pumpe 28 als selbstsaugende Pumpe ausgeführt.

Außerdem weist der erste Bremskreis 14 ein Pumpensteuerventil 32 auf, mittels welchem der erste Bremskreis 14 zumindest nach dem Schließen des Trennventils 22 über ein Schließen des Pumpensteuerventils aus dem ersten Modus in den zweiten Modus steuerbar ist, in welchem trotz eines Antriebs der ersten Pumpe 28 eine Bremsmediumverschiebung aus dem Bremsmediumreservoir 12 sowohl in den ersten Radbremszylinder 16a als auch in den zweiten Radbremszylinder 16b unterbunden ist. Somit kann ein unerwünschter Bremsdruckaufbau in den beiden Radbremszylindern 16a und 16b trotz eines Antriebs der ersten Pumpe 28 mittels eines Steuern des ersten Bremskreises 14 in dem zweiten Modus durch Schließen des Pumpensteuerventils verhindert werden. Dies gewährleistet beispielsweise die Möglichkeit, die erste Pumpe 28 an einer Welle 30 anzuordnen, welche mindestens eine weitere Komponente des mit dem Bremssystem ausgestatteten Fahrzeugs, insbesondere eine Komponente des Bremssystems, antreibt. Durch die Multifunktionalität der Welle 30 und des Motors 31 zum Betreiben der Welle 30 können mindestens ein weiterer Motor mit einer daran angeordneten zusätzlichen Welle zum Antreiben der mindestens einen weiteren Komponente eingespart werden. Die Multifunktionalität der Welle 30 und des Motors 31 reduziert somit Kosten und verringert den Bauraumbedarf am Fahrzeug.

Es wird darauf hingewiesen, dass die Multifunktionalität der Welle 30 und des Motors 31 mittels lediglich eines Pumpensteuerventils realisierbar ist. Die vorteilhafte Multifunktionalität der Welle 30 und des Motors 31, bzw. das Unterbinden des Befüllens zweier Radbremszangen/Radbremszylinder, ist somit realisierbar, ohne dass dazu die Gesamtanzahl der elektrisch ansteuerbaren Ventile des ersten Bremskreises 14 signifikant erhöht wird. Stattdessen muss bei der hier beschriebenen Technologie der von dem Hauptbremszylinder 10 abkoppelbare erste Bremskreis 14 lediglich mit einem Pumpensteuerventil ausgestattet werden. Dies spart Kosten und Bauraum. Gleichzeitig ist eine Gesamtanzahl von elektrisch ansteuerbaren Ventilen eines Bremssystems auf diese Weise realisierbar, welche die Verwendung einer unten genauer beschriebenen kostengünstigen Steuervorrichtung zum Steuern der elektrisch ansteuerbaren Ventile ermöglicht.

Als Pumpensteuerventil kann der erste Bremskreis 14 beispielsweise ein in einem Ansaugleitungsweg zwischen dem Bremsmediumreservoir 12 und der ersten Pumpe 26 angeordnetes Hochdruckschaltventil 32 umfassen. Die Ausführbarkeit des Pumpensteuerventils ist jedoch nicht auf dieses Beispiel beschränkt.

Ergänzend kann der erste Bremskreis 14 noch ein stetig verstellbares Regelventil 34 umfassen. Unter einem stetig verstellbaren Regelventil 34 kann ein Ventil verstanden werden, welches zusätzlich zu einer geschlossenen und einer ersten geöffneten Stellung noch mindestens in eine zweite geöffnete Stellung steuerbar ist. Das Regelventil 34 kann beispielsweise ein stetig stellbares/steuerbares Ventil sein. Das Regelventil 34 kann über eine Saugleitung 36 mit dem Bremsmediumreservoir 12 und/oder über eine zweite Verbindungsleitung 38 mit einem in der ersten Verbindungsleitung 26 angeordneten Verzweigungspunkt 40 so verbunden sein, dass ein drittes Bremsmediumvolumen (jeweils) aus dem ersten Radbremszylinder 16a und aus dem zweiten Radbremszylinder 16b über das zumindest teilgeöffnete Regelventil 34 in das Bremsmediumreservoir 12 transferierbar ist. Wahlweise ist eine Bremsmediumverschiebung aus dem ersten Radbremszylinder 16a und dem zweiten Radbremszylinder 16b in das Bremsmediumreservoir 12 mittels eines Schließens des Regelventils 34 unterbindbar. Mittels des Regelventils 34 ist somit der in den beiden Radbremszylindern 16a und 16b gewünschte Bremsdruck genauer einstellbar, bzw. auf einen gewünschten Wert reduzierbar.

Das Regelventil 34 kann vorteilhaft zusammen mit der ersten Pumpe 28 und dem als Pumpensteuerventil verwendeten Hochdruckschaltventil 32 eingesetzt werden. Dazu kann das Hochdruckschaltventil 32 über einen in der Saugleitung 36 ausgebildeten Verzweigungspunkt 42 und eine zwischen dem Verzweigungspunkt 42 und dem Hochdruckschaltventil 32 verlaufende Leitung 44 sowie eine zwischen dem Hochdruckschaltventil 32 und einer Saugseite der ersten Pumpe 28 verlaufende Leitung 46 zusammen mit der ersten Pumpe 28 parallel zu dem Regelventil 34 angeordnet sein.

Optionaler Weise kann der erste Bremskreis 14 mindestens einen Drucksensor 48 haben, welcher beispielsweise über einen in der ersten Verbindungsleitung 26 ausgebildeten Verzweigungspunkt 50 angebunden ist. Mittels eines Sensorsignals des Drucksensors 48 ist beispielsweise der in den Radbremszylindern 16a und 16b vorliegende Bremsdruck regelbar. Die Einstellung des Bremsdrucks in den Radbremszylindern 16a und 16b des ersten Bremskreises 14 kann beispielsweise mittels einer Δp-Ansteuerung des Regelventils 34 erfolgen. Als Alternative dazu ist auch eine Druckregelung des Bremsdrucks an der dem ersten Bremskreis 14 zugeordneten Achse möglich.

Die hydraulische Verschaltung des ersten Bremskreises 14 ist somit vergleichsweise einfach ausführbar. Trotzdem ist aufgrund des Trennventils 22 eine By-Wire-Funktionalität des ersten Bremskreises 14 gewährleistet. Der erste Bremskreis 14 ist vorzugsweise einkanalig ausgeführt, so dass eine einkanalige ABS-Regelung ausführbar ist, insbesondere zusätzlich zu einer (normalen) Teilbremsfunktion und/oder einem Verblenden eines Generator-Bremsmoments. Im Falle einer ABS-Regelung an der dem ersten Bremskreis 14 zugeordneten Achse ist das Select-Low-Verfahren vorteilhaft anwendbar, wobei der Bremsdruck in den beiden Radbremszylindern 16a und 16b entsprechend dem Minimum der beiden für die Radbremszylinder 16a und 16b spezifisch bevorzugten Bremsdrücke einstellbar ist.

Auch eine Hill-Hold-Funktion ist mittels des ersten Bremskreises 14 ausführbar. Dabei wird insbesondere bei einem Bremsen auf einer Fahrbahn mit einer Steigung der in den Radbremszylindern 16a und 16b eingestellte Bremsdruck noch für eine angegebene Zeitspanne nach dem Nachlassen der Betätigung eines Bremsbetätigungselements 52, wie beispielsweise eines Bremspedals, durch den Fahrer gehalten, um ein Abrutschen des Fahrzeugs vor einem Starten des Motors zu verhindern. Weitere Funktionen zum aktiven Druckhalten sind mit dem ersten Bremskreis 14 ebenfalls ausführbar.

Eine Überprüfung der Dichtheit des ersten Bremskreises 14 kann über eine Druckgradientenüberwachung bei einer Teilbremsung, bzw. bei einer entsprechenden Funktion, erfolgen. Alternativ kann die Dichtheit des ersten Bremskreises 14 auch durch einen Aktivtest überwacht werden.

Bevorzugter Weise hat das Bremssystem ein mit dem Hauptbremszylinder 10 verbundenes Bremsbetätigungselement 52, welches mit mindestens einem verstellbaren Hauptbremszylinder-Kolben des Hauptbremszylinders 10 so verbunden ist, dass der mindestens eine Hauptbremszylinder-Kolben mittels einer Betätigung des Bremsbetätigungselements 52 zumindest teilweise in mindestens ein Innenvolumen des Hauptbremszylinders 10 hinein verstellbar ist. Aufgrund der vorteilhaften Hydraulik insbesondere des ersten Bremskreises 14 ist das hier beschriebene Bremssystem auch ohne eine Ausstattung mit einem Bremskraftverstärker zum verlässlichen Abbremsen des damit ausgestatteten Fahrzeugs bei einer standardgemäßen Fahrerbremskraft einsetzbar. Der Fahrer muss damit selbst bei einem Verzicht auf einen Bremskraftverstärker keine vergleichsweise hohe Fahrerbremskraft auf das Bremsbetätigungselements 52 ausüben, da der in den Radbremszylindern 16a und 16b vorliegende Bremsdruck mittels der Hydraulik des ersten Bremskreises 14 steigerbar ist. Bevorzugter Weise ist das Bremsbetätigungselement 52 deshalb mit dem Hauptbremszylinder-Kolben derart verbunden, dass eine auf das Bremsbetätigungselement 52 aufgebrachte Vorderbremskraft unverstärkt auf den Hauptbremszylinder-Kolben übertragbar ist. Somit können die Kosten für einen Bremskraftverstärker eingespart werden.

Ein weiterer Vorteil liegt darin, dass der Fahrer nur die Radbremszylinder 60a und 60b (Bremszangen) des zweiten Bremskreises 56 über Muskelkraft füllen muss. Dazu benötigt er weniger Volumen als bei einem herkömmlichen Standardsystem. Daher kann ein vergleichsweise kleiner Durchmesser des Hauptbremszylinders 10 verwendet werden, der relativ geringe Kräfte benötigt. Dies verbessert den Bedienkomfort zusätzlich.

Das Bremsbetätigungselement 52 kann beispielsweise ein Bremspedal sein. Das Bremssystem ist jedoch nicht auf eine Ausführung des Bremsbetätigungselements 52 als Bremspedal beschränkt.

Vorteilhafter Weise ist auch mindestens ein Sensor 54 mit dem Bremsbetätigungselement 52 derart verbunden, dass eine Größe bezüglich einer Betätigungsstärke der Betätigung des Bremsbetätigungselements 52 durch den Fahrer mittels des Sensors 54 erfassbar ist. Die erfassbare Größe/Betätigungsstärke kann beispielsweise eine Fahrerbremskraft, ein Fahrerbremsdruck und/oder ein Verstellweg des Bremsbetätigungselements 52, bzw. einer daran angeordneten Komponente, sein. Der Sensor 54 kann insbesondere ein Pedalwegsensor, ein Booster-Membranwegsensor oder ein Stangenwegsensor sein. Die Ausbildbarkeit des Sensors 54 ist jedoch nicht auf die hier aufgezählten Beispiele beschränkt. Auf die Verwendbarkeit der von dem Sensor ermittelten Größe/Betätigungsstärke wird unten noch eingegangen.

In einer vorteilhaften Weiterbildung weist das Bremssystem zusätzlich noch einen mit dem Hauptbremszylinder 10 hydraulisch verbundenen zweiten Bremskreis 56 mit einer zweiten Pumpe 58 und/oder mindestens einem dritten Radbremszylinder 60a und 60b auf. Bei der dargestellten Ausführungsform hat der zweite Bremskreis 56 zwei Radbremszylinder 60a und 60b, denen jeweils ein Radeinlassventil 62a und 62b und jeweils ein Radauslassventil 64a und 64b zugeordnet ist. Eine Zufuhrleitung 66 verbindet den Hauptbremszylinder 10 mit einem Verzweigungspunkt 68, mit welchem die beiden Radeinlassventile 62a und 62b über jeweils eine Leitung 70a und 70b eingangsseitig verbunden sind. Ausgangsseitig ist jedes Radeinlassventil 62a und 62b über eine Leitung 72a oder 72b mit dem zugeordneten Radbremszylinder 60a oder 60b verbunden. Je ein in den Leitungen 72a und 72b ausgebildeter Verzweigungspunkt 74a oder 74b und eine davon fortführende Leitung 76a und 76b verbindet jeweils ein Radauslassventil 64a oder 64b mit dem zugeordneten Radbremszylinder 60a oder 60b. Von den Radauslassventilen 64a und 64b führt jeweils eine weitere Leitung 78a und 78b zu einem gemeinsamen Verzweigungspunkt 80, welcher über eine Leitung 82 mit einer Ansaugseite der zweiten Pumpe 58 verbunden ist. In der Leitung 82 kann ein Rückstoßventil 84 angeordnet sein, welches eine Bremsmediumverschiebung von der zweiten Pumpe 58 über die Leitung 82 zu dem Verzweigungspunkt 80 unterbindet. Ebenso kann über einen Verzweigungspunkt 86 eine Speicherkammer 88 an die Leitung 82 angebunden sein. Die Förderseite der zweiten Pumpe 58 kann über eine Leitung 90 mit einem in der Zufuhrleitung 66 ausgebildeten Verzweigungspunkt 92 verbunden sein.

Optimalerweise kann über einen weiteren Verzweigungspunkt 94 in der Zufuhrleitung 66 auch ein Drucksensor 96 angebunden sein, mit welchem der Bremsdruck in jedem der beiden Radbremszylinder 60a und 60b regelbar ist. Mittels des zweiten Bremskreises 56 ist somit neben der normalen Teilbremsfunktion auch eine Rad-individuelle ABS-Funktion ausführbar.

Die zweite Pumpe 58 kann insbesondere zusammen mit der ersten Pumpe 28 an der gemeinsamen Welle 30, welche mittels des Motors 31 antreibbar ist, angeordnet sein. Das Bremssystem ist hier als Zwei-Kolben-System dargestellt. Für die Pumpen 28 und 58 sind jedoch auch anders ausgeführte Systeme, wie beispielsweise Pumpen mit mehreren Kolben, asymmetrische Pumpen und/oder Zahnradpumpen, einsetzbar.

Das Bremssystem gewährleistet die vorteilhafte Anzahl von lediglich sieben elektrisch ansteuerbaren Ventilen 22, 32, 34, 62a, 62b, 64a und 64b, obwohl der erste Bremskreis 14 durch Schließen des Trennventils 22 vollständig von dem Hauptbremszylinder entkoppelbar ist. Somit ist mit dem Bremssystem eine (nicht skizzierte) Steuervorrichtung einsetzbar um an jedes elektrisch steuerbare Ventil 22, 32, 34, 62a, 62b, 64a und 64b jeweils ein eigenes Steuersignal auszugeben, wobei die Steuervorrichtung nicht mehr als sieben Signalausgänge zum Ausgeben der Steuersignale aufweisen muss. Für die Steuervorrichtung kann somit ein kostengünstiges und wenig Bauraum beanspruchendes Modell verwendet werden. Insbesondere können die vorteilhaften Modelle mit acht Signalausgängen zum Ausgeben der Steuersignale an jedes elektrisch steuerbare Ventil 22, 32, 34, 62a, 62b, 64a und 64b eingesetzt werden.

In einer Weiterbildung kann die Steuervorrichtung zusätzlich dazu ausgelegt sein, ein zeitlich variierendes Generator-Bremsmoment zu verblenden. In diesem Fall ist die Steuervorrichtung auch dazu ausgelegt, eine von dem Sensor 54 bereitgestellte Größe bezüglich der Betätigungsstärke der Betätigung des Bremsbetätigungselements 52 durch einen Fahrer des Fahrzeugs und eine Rekuperationsgröße bezüglich eines auf mindestens ein den Radbremszylindern 16a und 16b zugeordnetes Rad ausgeübtes Generator-Bremsmoment zu empfangen. Mittels der Steuervorrichtung kann unter Berücksichtigung der empfangen Betätigungsstärke und der empfangenen Rekuperationsgröße eine Soll-Trennventil-Größe des Trennventils 22, eine Soll-Regelventil-Größe des Regelventils 34 und eine Soll-Pump-Größe der ersten Pumpe 28 festlegbar sein. Beispielsweise kann von der Steuervorrichtung eine Differenz aus dem über die Größe/Betätigungsstärke bekannten Bremswunsch des Fahrers und dem Generator-Bremsmoment/Rekuperationsgröße (sowie evtl. den hydraulischen Bremsmomenten des zweiten Bremskreises 56) festgelegt und damit eine Soll-Pump-Größe der ersten Pumpe 28 zum Aufbauen eines der Differenz entsprechender Bremsdrucks in den Radbremszylindern 16a und 16b hergeleitet werden. Über die Soll-Regelventil-Größe des Regelventils 34 ist die Einsetzbarkeit der ersten Pumpe 28 zum Aufbauen des der Differenz entsprechenden Bremsdrucks in den Radbremszylindern 16a und 16b schaltbar. Beispielsweise kann vor dem Aktivieren der ersten Pumpe 28 das Hochdruckschaltventil 32 geöffnet werden. Mittels der Soll-Trennventil-Größe ist während des Verblendens gewährleistbar, dass der Fahrer nach einem Schließen des Trennventils 22 nur noch in den zweiten Bremskreis 56 (direkt) einbremst.

Anschließend kann ein der Soll-Trennventil-Größe entsprechendes Trennventil-Steuersignal an das Trennventil 22, ein der Soll-Regelventil-Größe entsprechendes Regelventil-Steuersignal an das Regelventil 34 und ein der Soll-Pump-Größe entsprechendes Pump-Steuersignal an die erste Pumpe 28 mittels der Steuervorrichtung bereitgestellt werden. Somit kann ein vorteilhaftes Verblenden des Generator-Bremselements mittels des ersten Bremskreises 14 und der Steuervorrichtung so ausgeführt werden, dass der Fahrer von diesem Vorgang nichts bemerkt. Mittels des Regelventils 34 kann der der Differenz entsprechende Bremsdruck zusätzlich genauer eingestellt werden.

Nach dem Druckaufbau entsprechend der Differenz wird das stetig verstellbare Regelventil 34 für ein Entbremsen korrespondierend zu dem abnehmenden Bremswunsch geöffnet. Insbesondere bei einer Nichtbetätigung des Bremsbetätigungselements 52, wenn die elektrisch steuerbaren Ventile 22, 32, 34, 62a, 62b, 64a und 64b vorzugsweise stromlos sind, ist eine geschlossene Stellung des Regelventils 34 vorteilhaft.

Bevorzugter Weise ist das Trennventil 22 ein stromlos offenes Ventil. Bei einer Nichtbetätigung des Bremsbetätigungselements 52 liegt somit eine hydraulische Verbindung zwischen dem ersten Bremskreis 14 und dem Hauptbremszylinder 10 vor, über welche ein Bremsmediumvolumen in das Bremsmediumreservoir 12 zurückströmen kann. Bei einer Beeinträchtigung der Funktionsfähigkeit der Stromversorgung des Bremssystems kann der Fahrer bei der bevorzugten stromlos offenen Ausbildung des Trennventils 22 noch verlässlich mittels eines Druckaufbaus in dem Hauptbremszylinder 10 in den ersten Bremskreis 14 hineinbremsen. Somit ist ein verlässliches Abbremsen des Fahrzeuges noch gewährleistet.

Das Bremssystem ist aus Standardkomponenten aufbaubar. Somit lässt es sich trotz der vergleichsweise großen Anzahl von ausführbaren Funktionen und realisierbaren Vorteilen kostengünstig herstellen.

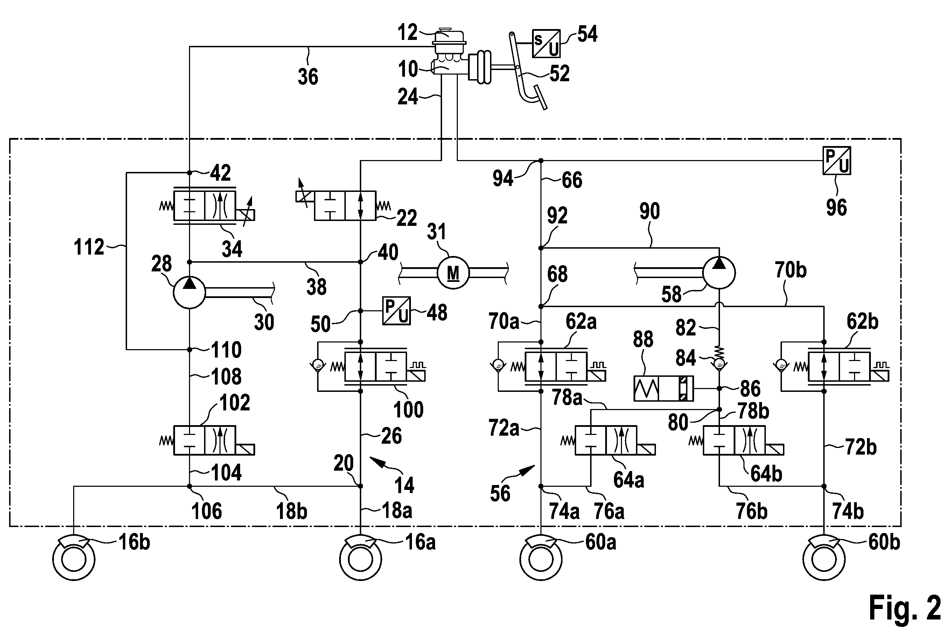

Fig. 2 zeigt eine schematische Darstellung eines nicht von der Erfindung umfassten Bremssystems.

Das in Fig. 2 schematisch dargestellte Bremssystem weist bis auf das als Ausbildungsbeispiel für ein Pumpensteuerventil wiedergegebene Hochdruckschaltventil die bereits beschriebenen Komponenten der zuvor beschriebenen Ausführungsform auf. Auf eine erneute Beschreibung dieser Komponenten und der durch sie gewährleisteten Vorteile wird deshalb hier verzichtet.

Das in Fig. 2 wiedergegebene Bremssystem weist als Pumpensteuerventil ein in einem Förderleitungsweg zwischen der ersten Pumpe 26 und dem Verzweigungspunkt 20 angeordnetes Radeinlassventil 100 auf. Auch bei der Verwendung des Radeinlassventils 100 als (einziges) Pumpensteuerventil sind die oben schon genannten Vorteile gewährleistet.

Zusätzlich zu dem Radeinlassventil 100 weist der erste Bremskreis 14 noch ein Radauslassventil 102 auf. Zur Druckregelung des Bremsdrucks in den beiden Radbremszylindern 16a und 16b des ersten Bremskreises 14 können bei dieser Ausführungsform somit (zusätzlich zu der ersten Pumpe 28 und dem Regelventil 34) auch das Radeinlassventil 100 und das Radauslassventil 102 verwendet werden. Das Radauslassventil 102 kann über eine Leitung 104 mit einem in der zweiten Ausgangsleitung 18b ausgebildeten Verzweigungspunkt 106 und über eine Leitung 108 mit einem Verzweigungspunkt 110 verbunden sein, welcher in einer parallel zu der ersten Pumpe 28 und dem Regelventil 34 verlaufenden Leitung 112 ausgebildet ist. Die hier beschriebenen hydraulischen Anbindungen für das Radeinlassventil 100 und das Radauslassventil 102 sind jedoch nur beispielhaft zu verstehen. Bei dieser Ausführungsform ist es insbesondere vorteilhaft, wenn gleichzeitig mit einem Schließen des Radeinlassventils 100 des ersten Bremskreises 14 zum Verhindern eines nicht gewünschten Druckaufbaus in den beiden Radbremszylindern 16a und 16b trotz eines Antriebs der ersten Pumpe 28 das Regelventil 34 zumindest teilgeöffnet wird. Die Verwendbarkeit des Radeinlassventils 100 als Pumpensteuerventil ist jedoch nicht auf diese Vorgehensweise beschränkt.

Der erste Bremskreis 14 ist einkanalig ausgeführt, so dass eine einkanalige ABS-Regelung ausführbar ist, vorzugsweise neben einer (normalen Teilbremsfunktion) und/ dem oben schon beschriebenen Verblenden eines Generator-Bremsmoments entsprechend des Bremswunsches des Fahrers auch.

Das anhand der in Fig. 2 wiedergegebene Bremssystem weist nicht mehr als acht elektrisch schaltbare Ventile 22, 34, 62a, 62b, 64a, 64b, 100 und 102 auf. Somit kann für dieses Bremssystem zum Bereitstellen aller Steuersignale zum Steuern der Ventile 22, 34, 62a, 62b, 64a, 64b, 100 und 102 eine Steuervorrichtung mit nur acht Signalausgängen verwendet werden. Für das Bremssystem ist somit eine kostengünstige Steuervorrichtung verwendbar.

Insbesondere die Reduzierung der herkömmlichen Anzahl von Ventilen zum Verhindern einer Steigerung des Bremsdrucks in den beiden Radbremszylindern 16a und 16b trotz eines Antriebs der ersten Pumpe 28 auf das (einzige) Pumpensteuerventil wirkt sich kostensenkend aus, da Steuervorrichtungen mit nur acht Steuersignalausgängen wesentlich günstiger als erhältliche Steuervorrichtungen mit einer Anzahl von mindestens neun Steuersignalausgängen sind.

Die in den oberen Absätzen beschriebenen Bremssysteme sind nicht nur in einem Elektro- und in einem Hybridfahrzeug, sondern auch in anderen Fahrzeugtypen, einsetzbar. Vorteilhafterweise ist das Fahrzeug mit einem derartigen Bremssystem für eine Höchstgeschwindigkeit kleiner als 100 km/h, vorzugsweise kleiner als 80 km/h, insbesondere kleiner als 60 km/h ausgelegt. Gerade bei einem derartigen Fahrzeugtyp mit einer vergleichsweise niedrigen Höchstgeschwindigkeit sind die kostengünstigen und wenig Bauraum erfordernden Bremssysteme vorteilhaft einsetzbar, da sie alle für diesen Fahrzeugtyp benötigten Funktionen ausführen können. Gleichzeitig gewährleisten sie den Vorteil des für den Fahrer nicht bemerkbaren Verblendens bei einer Energiegewinnung mittels eines Generators, wodurch der Kraftstoffverbrauch reduzierbar und diese Fahrzeuge zusätzlich noch mit einer kleineren Batterie ausstattbar sind. Gerade bei derartigen Fahrzeugen mit einer begrenzten Höchstgeschwindigkeit bevorzugen viele Fahrer eine kostengünstige Ausbildung und einen reduzierten Kraftstoffverbrauch, insbesondere im Stadtverkehr mit einem häufigen Abbremsen. Es wird jedoch darauf hingewiesen, dass die Einsetzbarkeit der Bremssysteme nicht auf ein Fahrzeug mit einer derartigen Geschwindigkeitsbegrenzung limitiert ist.

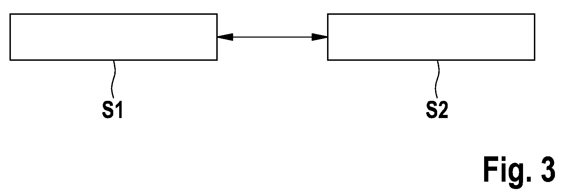

Fig. 3 zeigt ein Flussdiagramm eines nicht von der Erfindung umfassten Verfahrens zum Betreiben des Bremssystems.

Das in dem Flussdiagramm der Fig. 3 schematisch wiedergegebene Verfahren ist mit einem Bremssystem ausführbar, welches einen Hauptbremszylinder, ein Bremsmediumreservoir und zumindest einen Bremskreis mit mindestens einem ersten Radbremszylinder, einem zweiten Radbremszylinder, einem Trennventil, wobei eine Bremsmediumverschiebung aus dem Hauptbremszylinder in den ersten Radbremszylinder und in den zweiten Radbremszylinder durch Schließen des Trennventils unterbunden wird, und einer Pumpe zum Pumpen eines Bremsmediumvolumens aus dem Bremsmediumreservoir (jeweils) in den ersten Radbremszylinder und den zweiten Radbremszylinder, umfasst. Beispielsweise ist das Verfahren mittels der oben beschriebenen Bremssysteme ausführbar. Die Ausführbarkeit des Verfahrens ist jedoch nicht auf die oben beschriebenen Bremssysteme beschränkt.

In einem Verfahrensschritt S1 wird mittels eines Motors der Pumpe mindestens eine an der gemeinsamen Welle mit der Pumpe angeordnete Fahrzeugkomponente angetrieben. Die mindestens eine Fahrzeugkomponente kann insbesondere eine Komponente des Bremssystems, wie beispielsweise eine weitere Pumpe eines zusätzlichen Bremskreises, sein. Um eine unerwünschte Bremsdrucksteigerung in dem ersten Radbremszylinder als auch in den zweiten Radbremszylinder während des Antreibens der Fahrzeugkomponente zu verhindern, wird in dem Verfahrensschritt S1 auch ein Pumpensteuerventil geschlossen, durch welches eine Bremsmediumförderung aus dem Bremsmediumreservoir sowohl in den ersten Radbremszylinder als auch in den zweiten Radbremszylinder (trotz des Mitantriebs der Pumpe) unterbunden wird. Vorteilhafte Anbringpositionen uns Ausbildungsbeispiele des Pumpensteuerventils sind oben bereits beschrieben.

In einem Verfahrensschritt S2 wird die Pumpe mittels des Motors angetrieben. Außerdem wird in dem Verfahrensschritt S2 das Pumpensteuerventil geöffnet, so dass das (vorgebbare) Bremsmediumvolumen aus dem Bremsmediumreservoir (jeweils) in den ersten Radbremszylinder und den zweiten Radbremszylinder mittels der angetriebenen Pumpe gepumpt wird.

Die Verfahrensschritte S1 und S2 können in beliebiger zeitlicher Reihenfolge sich unmittelbar wiederholend und/oder abwechseln ausgeführt werden.

## Patentansprüche

1. Bremssystem für ein Fahrzeug mit
einem Hauptbremszylinder (10) und einem Bremsmediumreservoir (12); und zumindest einem ersten Bremskreis (14) mit:
mindestens einem ersten Radbremszylinder (16a) und einem zweiten Radbremszylinder (16b);
einem Trennventil (22), welches derart mit dem Hauptbremszylinder (10) verbunden ist, dass ein erstes Bremsmediumvolumen aus dem Hauptbremszylinder (10) über das zumindest teilgeöffnete Trennventil (22) in eine angebundene erste Verbindungsleitung (26), und über die erste Verbindungsleitung (26) in den ersten Radbremszylinder (16a) und den zweiten Radbremszylinder (16b) transferierbar ist, wobei eine Bremsmediumverschiebung aus dem Hauptbremszylinder (10) in den ersten Radbremszylinder (16a) und in den zweiten Radbremszylinder (16b) mittels eines Schließens des Trennventils (22) unterbindbar ist;
einer ersten Pumpe (28), mittels welcher nach dem Schließen des Trennventils (22) zumindest in einem ersten Modus des ersten Bremskreises (14) ein zweites Bremsmediumvolumen aus dem Bremsmediumreservoir (12) in den ersten Radbremszylinder (16a) und den zweiten Radbremszylinder (16b) pumpbar ist; und
einem stetig verstellbaren Regelventil (34), welches über eine Saugleitung (36) mit dem Bremsmediumreservoir (12) und über eine zweite Verbindungsleitung (38) derart mit einem in der ersten Verbindungsleitung (26) ausgebildeten Verzweigungspunkt (40) verbunden ist, dass ein drittes Bremsmediumvolumen aus dem ersten Radbremszylinder (16a) und dem zweiten Radbremszylinder (16b) über das zumindest teilgeöffnete Regelventil (34) in das Bremsmediumreservoir (12) transferierbar ist und eine Bremsmediumverschiebung aus dem ersten Radbremszylinder (16a) und dem zweiten Radbremszylinder (16b) in das Bremsmediumreservoir (12) mittels eines Schließens des Regelventils (34) unterbindbar ist;
wobei das Bremssystem einen mit dem Hauptbremszylinder (10) hydraulisch verbundenen zweiten Bremskreis (56) mit einer zweiten Pumpe (58), einem dritten Radbremszylinder (60a) und einem vierten Radbremszylinder (60b), denen jeweils ein Radeinlassventil (62a, 62b) und jeweils ein Radauslassventil (64a, 64b) zugeordnet sind, umfasst;
**dadurch gekennzeichnet, dass**
der erste Bremskreis (14) ein Pumpensteuerventil (32) umfasst, wobei der erste Bremskreis (14) als Pumpensteuerventil (32) ein in einem Ansaugleitungsweg zwischen dem Bremsmediumreservoir (12) und der ersten Pumpe (28) angeordnetes Hochdruckschaltventil (32) umfasst, wodurch der erste Bremskreis (14) zumindest nach dem Schließen des Trennventils (22) über ein Schließen des Pumpensteuerventils (32) aus dem ersten Modus in einen zweiten Modus steuerbar ist, in welchem trotz eines Antriebs der ersten Pumpe (28) eine Bremsmediumförderung aus dem Bremsmediumreservoir (12) sowohl in den ersten Radbremszylinder (16a) als auch in den zweiten Radbremszylinder (16b) unterbunden ist; und
das Bremssystem mit dem Trennventil (22), dem Hochdruckschaltventil (32), dem stetig verstellbaren Regelventil (34), den zwei Radeinlassventilen (62a, 62b) und den zwei Radauslassventilen (64a, 64b) genau sieben in zumindest in einen offenen Zustand und in einen geschlossenen Zustand elektrisch schaltbare Ventile (22, 32, 34, 62a, 62b, 64a, 64b) umfasst.

2. Bremssystem nach Anspruch 1, wobei das Bremssystem eine Steuervorrichtung umfasst, mittels welcher an jedes in zumindest in einen offenen Zustand und in einen geschlossenen Zustand elektrisch schaltbare Ventil (22, 32, 34, 62a, 62b, 64a, 64b) des Bremssystems jeweils ein eigenes Steuersignal ausgebbar ist, wobei die Steuervorrichtung genau sieben Signalausgänge aufweist, an welchen die Steuersignale ausgebbar sind.

3. Bremssystem nach Anspruch 2, wobei die Steuervorrichtung zusätzlich dazu ausgelegt ist, eine von einem Sensor (54) bereitgestellte Größe bezüglich einer Betätigungsstärke einer Betätigung eines Bremsbetätigungselements (52) durch einen Fahrer des Fahrzeugs und eine Rekuperationsgröße bezüglich eines auf mindestens die dem ersten Radbremszylinder (16a) und dem zweiten Radbremszylinder (16b) zugeordneten Räder ausgeübten Generator-Bremsmoments zu empfangen, unter Berücksichtigung der empfangenen Größe und der empfangenen Rekuperationsgröße eine Soll-Trennventil-Größe des Trennventils (22), eine Soll-Regelventil-Größe des Regelventils (34) und eine Soll-Pump-Größe der ersten Pumpe (28) festzulegen, und ein der Soll-Trennventil-Größe entsprechendes Trennventil-Steuersignal an das Trennventil (22), ein der Soll-Regelventil-Größe entsprechendes Regelventil-Steuersignal an das Regelventil (34) und ein der Soll-Pump-Größe entsprechendes Pump-Steuersignal an die erste Pumpe (28) bereitzustellen.

4. Bremssystem nach Anspruch 3 wobei das Bremsbetätigungselement (52) mit mindestens einem verstellbaren Hauptbremszylinder-Kolben des Hauptbremszylinders (10) derart verbunden ist, dass eine auf das Bremsbetätigungselement (52) aufgebrachte Fahrerbremskraft unverstärkt auf den Hauptbremszylinder-Kolben übertragbar ist.

5. Bremssystem nach einem der vorhergehenden Ansprüche, wobei das Bremssystem einen Motor (31) mit einer Welle (30), an welcher die erste Pumpe (28) und die zweiten Pumpe (58) angeordnet sind, umfasst.

6. Bremssystem nach einem der vorhergehenden Ansprüche, wobei der erste Bremskreis (14) nach dem Schließen des Trennventils (22) vollständig von dem Hauptbremszylinder (10) entkoppelt ist.

7. Fahrzeug mit einem Bremssystem nach einem der vorhergehenden Ansprüche, wobei das Fahrzeug für eine Höchstgeschwindigkeit kleiner als 100 km/h, vorzugsweise kleiner als 80 km/h, insbesondere kleiner als 60 km/h ausgelegt ist.

## Claims

1. Braking system for a vehicle having
a brake master cylinder (10) and a brake medium reservoir (12); and
at least a first brake circuit (14) having:
at least a first wheel brake cylinder (16a) and a second wheel brake cylinder (16b);
a separating valve (22) which is connected to the brake master cylinder (10) in such a way that a first brake medium volume can be transferred out of the brake master cylinder (10) via the at least partially open separating valve (22) into an attached first connecting line (26) and via the first connecting line (26) into the first wheel brake cylinder (16a) and the second wheel brake cylinder (16b), it being possible for a displacement of brake medium out of the brake master cylinder (10) into the first wheel brake cylinder (16a) and into the second wheel brake cylinder (16b) to be suppressed by means of closing of the separating valve (22) ;
a first pump (28), by means of which, after closing of the separating valve (22), a second brake medium volume can be pumped out of the brake medium reservoir (12) into the first wheel brake cylinder (16a) and the second wheel brake cylinder (16b) at least in a first mode of the first brake circuit (14); and
a continuously adjustable control valve (34) which is connected via a suction line (36) to the brake medium reservoir (12) and via a second connecting line (38) to a branching point (40) which is configured in the first connecting line (26), in such a way that a third brake medium volume can be transferred out of the first wheel brake cylinder (16a) and the second wheel brake cylinder (16b) via the at least partially open control valve (34) into the brake medium reservoir (12), and a displacement of brake medium out of the first wheel brake cylinder (16a) and the second wheel brake cylinder (16b) into the brake medium reservoir (12) can be suppressed by means of closing of the control valve (34);
the braking system comprising a second brake circuit (56) which is connected hydraulically to the brake master cylinder (10), with a second pump (58), a third wheel brake cylinder (60a) and a fourth wheel brake cylinder (60b) which are assigned in each case one wheel inlet valve (62a, 62b) and in each case one wheel outlet valve (64a, 64b);
**characterized in that**
the first brake circuit (14) comprises a pump control valve (32), the first brake circuit (14) comprising, as pump control valve (32), a high-pressure switching valve (32) which is arranged in an intake line path between the brake medium reservoir (12) and the first pump (28), as a result of which, at least after closing of the separating valve (22), the first brake circuit (14) can be controlled out of the first mode into a second mode via closing of the pump control valve (32), in which second mode, despite driving of the first pump (28), a delivery of brake medium out of the brake medium reservoir (12) both into the first wheel brake cylinder (16a) and into the second wheel brake cylinder (16b) is suppressed; and
the braking system, in the separating valve (22), the high-pressure switching valve (32), the continuously adjustable control valve (34), the two wheel inlet valves (62a, 62b) and the two wheel outlet valves (64a, 64b), comprises precisely seven valves (22, 32, 34, 62a, 62b, 64a, 64b) which can be switched electrically at least into an open state and into a closed state.

2. Braking system according to Claim 1, the braking system comprising a control apparatus, by means of which in each case a dedicated control signal can be output to each valve (22, 32, 34, 62a, 62b, 64a, 64b) of the braking system which can be switched electrically at least into an open state and into a closed state, the control apparatus having precisely seven signal outputs, at which the control signals can be output.

3. Braking system according to Claim 2, the control apparatus additionally being designed to receive a variable which is provided by a sensor (54) with regard to an actuating strength of an actuation of a brake actuating element (52) by way of a driver of the vehicle and a recuperation variable with regard to a generator braking moment which is exerted on at least the wheels which are assigned to the first wheel brake cylinder (16a) and the second wheel brake cylinder (16b), to fix a setpoint separating valve variable of the separating valve (22), a setpoint control valve variable of the control valve (34) and a setpoint pump variable of the first pump (28) with consideration of the received variable and the received recuperation variable, and to provide a separating valve control signal which corresponds to the setpoint separating valve variable to the separating valve (22), a control valve control signal which corresponds to the setpoint control valve variable to the control valve (34), and a pump control signal which corresponds to the setpoint pump variable to the first pump (28).

4. Braking system according to Claim 3, the brake actuating element (52) being connected to at least one adjustable brake master cylinder piston of the brake master cylinder (10) in such a way that a driver's braking force which is applied to the brake actuating element (52) can be transmitted in an un-boosted manner to the brake master cylinder piston.

5. Braking system according to one of the preceding claims, the braking system comprising a motor (31) with a shaft (30), on which the first pump (28) and the second pump (58) are arranged.

6. Braking system according to one of the preceding claims, the first brake circuit (14) being decoupled completely from the brake master cylinder (10) after closing of the separating valve (22).

7. Vehicle having a braking system according to one of the preceding claims, the vehicle being designed for a maximum speed of lower than 100 km/h, preferably lower than 80 km/h, in particular lower than 60 km/h.

## Revendications

1. Système de freinage pour un véhicule avec :
un maître-cylindre de frein (10) et un réservoir d'agent de freinage (12) ; et
au moins un premier circuit de freinage (14) avec :
au moins un premier cylindre de frein de roue (16a) et un deuxième cylindre de frein de roue (16b) ;
une soupape de séparation (22) reliée de telle sorte au maître-cylindre de frein (10) qu'un premier volume d'agent de freinage peut être transféré du maître-cylindre de frein (10) à une première conduite de liaison (26) raccordée, via la soupape de séparation (22) au moins en partie ouverte, et au premier cylindre de frein de roue (16a) et au deuxième cylindre de frein de roue (16b) via la première conduite de liaison (26), un déplacement d'agent de freinage du maître-cylindre de frein (10) jusque dans le premier cylindre de frein de roue (16a) et dans le deuxième cylindre de frein de roue (16b) pouvant être entravé en fermant la soupape de séparation (22) ;
une première pompe (28) à l'aide de laquelle après la fermeture de la soupape de séparation (22), au moins dans un premier mode du premier circuit de freinage (14), un deuxième volume d'agent de freinage peut être pompé du réservoir d'agent de freinage (12) jusque dans le premier cylindre de frein de roue (16a) et le deuxième cylindre de frein de roue (16b) ; et
une soupape de régulation (34) réglable en continu reliée au réservoir d'agent de freinage (12) via une conduite d'aspiration (36) et à un point de ramification (40) réalisé dans la première conduite de liaison (26) via une deuxième conduite de liaison (38) de telle sorte qu'un troisième volume d'agent de freinage peut être transféré du premier cylindre de frein de roue (16a) et du deuxième cylindre de frein de roue (16b) au réservoir d'agent de freinage (12) via la soupape de régulation (34) au moins en partie ouverte et qu'un déplacement d'agent de freinage du premier cylindre de frein de roue (16a) et du deuxième cylindre de frein de roue (16b) jusque dans le réservoir d'agent de freinage (12) peut être entravé en fermant la soupape de régulation (34) ;
le système de freinage comprenant un deuxième circuit de freinage (56) relié de façon hydraulique au maître-cylindre de frein (10) avec une deuxième pompe (58), un troisième cylindre de frein de roue (60a) et un quatrième cylindre de frein de roue (60b) auxquels sont respectivement associées une soupape d'admission de roue (62a, 62b) et respectivement une soupape d'échappement de roue (64a, 64b) ;
**caractérisé en ce que** :
le premier circuit de freinage (14) comprend une soupape de commande de pompe (32), le premier circuit de freinage (14) prenant la forme de la soupape de commande de pompe (32) comprenant une soupape de commutation en haute pression (32) disposée dans un passage de conduite d'aspiration prévu entre le réservoir d'agent de freinage (12) et la première pompe (28), le premier circuit de freinage (14) pouvant ainsi être commandé au moins après la fermeture de la soupape de séparation (22) via une fermeture de la soupape de commande de pompe (32) pour passer du premier mode dans un deuxième mode dans lequel malgré un entraînement de la première pompe (28), une extraction d'agent de freinage du réservoir d'agent de freinage (12) tant vers le premier cylindre de frein de roue (16a) que vers le deuxième cylindre de frein de roue (16b) est entravée ; et
le système de freinage comprend avec la soupape de séparation (22), la soupape de commutation en haute pression (32), la soupape de régulation (34) réglable en continu, les deux soupapes d'admission de roue (62a, 62b) et les deux soupapes d'échappement de roue (64a, 64b) précisément sept soupapes (22, 32, 34, 62a, 62b, 64a, 64b) pouvant être commutées électriquement au moins dans un état ouvert et dans un état fermé.

2. Système de freinage selon la revendication 1, le système de freinage comprenant un dispositif de commande à l'aide duquel un signal de commande propre peut respectivement être envoyé à chaque soupape (22, 32, 34, 62a, 62b, 64a, 64b) du système de freinage pouvant être commutée au moins dans un état ouvert et dans un état fermé, le dispositif de commande comportant précisément sept sorties de signal au niveau desquelles les signaux de commande peuvent être émis.

3. Système de freinage selon la revendication 2, le dispositif de commande étant en outre conçu pour recevoir une grandeur mise à disposition par un capteur (54) par rapport à une puissance d'actionnement d'un actionnement d'élément d'actionnement de frein (52) par un conducteur du véhicule et une grandeur de récupération par rapport à un couple de freinage de générateur exercé sur au moins les roues associées au premier cylindre de frein de roue (16a) et au deuxième cylindre de frein de roue (16b), pour déterminer une grandeur de soupape de régulation théorique de la soupape de régulation (34) et une grandeur de pompe théorique de la première pompe (28) en tenant compte de la grandeur reçue et de la grandeur de récupération reçue une grandeur de soupape de séparation théorique de la soupape de séparation (22) et pour mettre à disposition de la soupape de séparation (22) un signal de commande de soupape de séparation correspondant à la grandeur de soupape de séparation théorique, à disposition de la soupape de régulation (34) un signal de commande de soupape de régulation correspondant à la grandeur de soupape de régulation théorique et à disposition de la première pompe (28) un signal de commande de pompe correspondant à la grandeur de pompe théorique.

4. Système de freinage selon la revendication 3, l'élément d'actionnement de frein (52) étant relié à au moins un piston de maître-cylindre de frein mobile du maître-cylindre de frein (10) de telle sorte qu'une force de freinage appliquée par le conducteur sur l'élément d'actionnement de frein (52) peut être transmise au piston de maître-cylindre de frein sans être renforcée.

5. Système de freinage selon l'une quelconque des revendications précédentes, le système de freinage comprenant un moteur (31) avec un arbre (30) au niveau duquel la première pompe (28) et la deuxième pompe (58) sont disposées.

6. Système de freinage selon l'une quelconque des revendications précédentes, le premier circuit de freinage (14) étant entièrement découplé du maître-cylindre de frein (10) après la fermeture de la soupape de séparation (22).

7. Véhicule équipé d'un système de freinage selon l'une quelconque des revendications précédentes, le véhicule étant conçu pour une vitesse maximale inférieure à 100 km/h, de préférence inférieure à 80 km/h, notamment inférieure à 60 km/h.
